# FASCICULE DE BREVET EUROPEEN

(11) **EP 0 667 669 B1**
(45) Date de publication et mention de la délivrance du brevet: **22.10.1997**
(21) Numéro de dépôt: 95400262.2
(22) Date de dépôt: 08.02.1995
(51) Int. Cl.: H02K 5/14, H01R 39/40, H02K 5/22

(54) **Support de balai pour machine électrique tournante**
Bürstenträger für elektrische Maschine
Brush holder for electric machine

(30) Priorité: 11.02.1994 FR 9401583
(43) Date de publication de la demande: 16.08.1995
(73) Titulaire: MOTEURS LEROY-SOMER, F-16015 Angouleme Cédex (FR)
(72) Inventeur: Gobled, Francis, F-38780 Eysin-Pinet (FR)
(74) Mandataire: Derambure, Christian

(56) Documents cités:
- EP-A- 0 043 460
- EP-A- 0 291 823
- EP-A- 0 351 293
- DE-A- 3 817 735
- US-A- 4 110 651

## Description

L'invention concerne un support de balai pour machine électrique tournante.

Dans une machine électrique tournante telle qu'un moteur à courant continu, les balais s'usent rapidement au contact du collecteur. Il est donc nécessaire de remplacer les balais périodiquement.

De plus, le matériau ainsi usé se dépose sous forme de poussière notamment sur les lames du collecteur, ce qui nuit à la qualité du contact entre le balai et les lames. Ce matériau se répand également dans toute la chambre de commutation. Il faut donc procéder au nettoyage du collecteur et de la chambre de commutation régulièrement.

Certains supports de balais se composent d'un tube fixé radialement dans la paroi du carter. Le balai se trouve dans l'axe du tube et est maintenu en contact avec le collecteur par un ressort de rappel. Le balai est facilement démontable. Toutefois, l'ouverture ménagée vers la chambre de commutation a une surface égale à la section du balai, ce qui la rend très étroite. L'accès à la chambre est donc impossible. De plus, une partie du tube dépasse de la surface du carter afin de pouvoir le saisir facilement pour le dévisser. Il en résulte à l'extérieur du carter un encombrement regrettable dans certaines conditions.

D'autres supports de balai comprennent un disque fixé axialement à l'intérieur du carter. Ce disque porte les balais disposés radialement et leur moyens de rappel. Le principal inconvénient de ce dispositif est qu'il est nécessaire d'ouvrir le carter pour accéder aux balais, ce qui constitue une opération relativement lourde.

Un example de support de balai encliquetable selon l'art antérieur est décrit dans le document US-A-4 110 651.

L'invention a pour but de pallier ces inconvénients en proposant un support de balai qui permette tout à la fois un accès facile et immédiat aux balais ainsi qu'un large accès à la chambre de commutation et au collecteur pour assurer une maintenance rapide de la machine, et ce sans augmenter sensiblement l'encombrement extérieur de la machine.

C'est pourquoi l'invention vise un support de balai pour machine électrique tournante tel que décrit dans la revendication 1, ce support comprenant un balai mobile et des moyens de rappel du balai pour le maintenir en contact avec le collecteur de la machine.

Le support de balai comprend des moyens d'encliquetage pour fixer le support au carter de la machine par encliquetage radial à l'axe du carter.

Par moyens d'encliquetage, on entend des moyens grâce auxquels le support est introduit dans le carter et se trouve fixé dès qu'il atteint l'emplacement prévu pour lui. Ces moyens permettent le décliquetage en ce sens que le support n'est plus fixé dès qu'on l'ôte de sa position sur le carter.

Le support n'étant pas fixé au carter par vissage mais par encliquetage, on peut donner à l'orifice de réception du support sur le carter une grande surface pour offrir un large accès au collecteur et à la chambre de commutation. En effet, les moyens d'encliquetage coopèrent avec les bords de l'ouverture ou des parties du carter voisines de celles-ci, ces bords pouvant être éloignés l'un de l'autre.

L'encliquetage permet de fixer instantanément le support sur le carter et aussi de l'en ôter très rapidement par exemple pour changer le balai.

Le support pouvant être de grande dimension par rapport aux supports de l'état de la technique, il n'est pas nécessaire de le concevoir pour qu'il dépasse sensiblement de la surface du carter. Ses grandes dimensions permettent de le saisir sans difficulté à la main même s'il ne dépasse par exemple que de deux ou trois millimètres de la surface du carter.

Selon une version avantageuse de l'invention, les moyens d'encliquetage comprennent une patte ayant une extrémité mobile suivant une direction sensiblement orthogonale à la direction de mobilité du balai.

Cette patte qui s'appuie sur le carter peut par exemple coopérer avec une partie du corps du support opposée à la patte et appuyée sur le carter en sens opposé.

Cette version assure une mise en place et un démontage particulièrement aisés du support de balai sur le carter tout en fournissant des moyens d'encliquetage d'encombrement réduit et de constitution simple.

Selon une version avantageuse de l'invention dans laquelle la région du carter se trouvant au voisinage du collecteur a une forme sensiblement cylindrique, la portion du support située à l'opposé du balai a une forme générale en secteur de cylindre de sorte que le balai est orienté sensiblement suivant une direction radiale à l'axe du cylindre, le cylindre ayant son axe du côté du balai.

Cette forme donne au support de balai un encombrement extérieur très réduit en épousant les contours extérieurs du carter. L'absence de partie proéminente du support à l'extérieur du carter limite les risques d'arrachement accidentels du support.

Selon une version avantageuse de l'invention, le support comprend un pôle de connexion électrique du balai, tel qu'un fil ou une borne, qui s'étend depuis la face extérieure du secteur de cylindre.

Selon une version préférée de l'invention, le support comprend une plaque métallique connectée au balai et au moins partiellement à nu par rapport au corps du support.

Cette plaque offre une importante surface pour la connexion du balai et permet notamment de varier les modes de connexion du balai (vissage, soudage, connexion intérieure ou extérieure au carter, ...) avec le même support. Le même modèle de support standard peut donc être employé dans des applications variées, ce qui en réduit le coût.

La présente invention vise aussi une machine électrique tournante caractérisée en ce qu'elle comporte au moins un support de balai selon l'invention.

La présente invention vise en outre une machine électrique tournante comprenant un carter qui présente des évidements pour la fixation de supports de balai.

Selon l'invention, cette machine est caractérisée en ce que le carter comprend au voisinage des bords de chaque évidement des moyens d'encliquetage pour fixer le support au carter par encliquetage radial à l'axe du carter, et le séparer de celui-ci par déplacement tangentiel.

En effet, les moyens d'encliquetage du support sur le carter peuvent être prévus sur la région du carter destinée à recevoir les supports plutôt que sur les supports en eux-mêmes.

Selon une version avantageuse de l'invention, chaque évidement présente une surface évidée au moins trois fois plus grande que la section axiale du balai.

En effet, la fourniture de moyens d'encliquetage autorise de donner au support et à l'évidement des dimensions importantes qui permettent un accès facile au collecteur et à la chambre de connexion. Bien entendu, ce critère de dimension ne constitue qu'un minimum avantageux et l'on pourra très avantageusement donner des dimensions plus grandes à ces éléments.

L'invention vise encore un procédé de fabrication d'un support de balai selon l'invention.

Selon l'invention, le procédé est caractérisé en ce qu'il comprend les étapes successives consistant à:
- découper une plaque de métal; et
- surmouler par injection le corps du support autour de cette plaque afin de la noyer partiellement dans le corps.

D'autres avantages de l'invention apparaîtront encore dans la description qui va suivre d'un mode préféré de réalisation des divers aspects de l'invention. Aux dessins annexés donnés à titre d'exemple non-limitatif:
- la figure 1 est une vue partielle en coupe d'un moteur à courant continu comprenant un support de balai selon un mode de réalisation de l'invention;
- les figures 2a, 2b et 2c sont des vues respectivement de dessous, en élévation et de gauche en coupe axiale du corps du support de balai de la figure 1;
- les figures 3a et 3b sont des vues arrière et de droite en coupe axiale du support de balai de la figure 1;
- la figure 4 est une vue arrière d'une variante de réalisation du support de balai;
- les figures 5a, 5b et 6a, 6b sont des vues analogues à la figure 3a montrant deux étapes respectivement du montage et du démontage du support de balai sur le carter ; et
- la figure 7 est une vue en coupe axiale du carter destiné à recevoir les supports de balai.

Le support de balai selon l'invention est destiné aux machines électriques tournantes.

Dans le mode de réalisation qui va être décrit, la machine est un moteur à courant continu à quatre pôles.

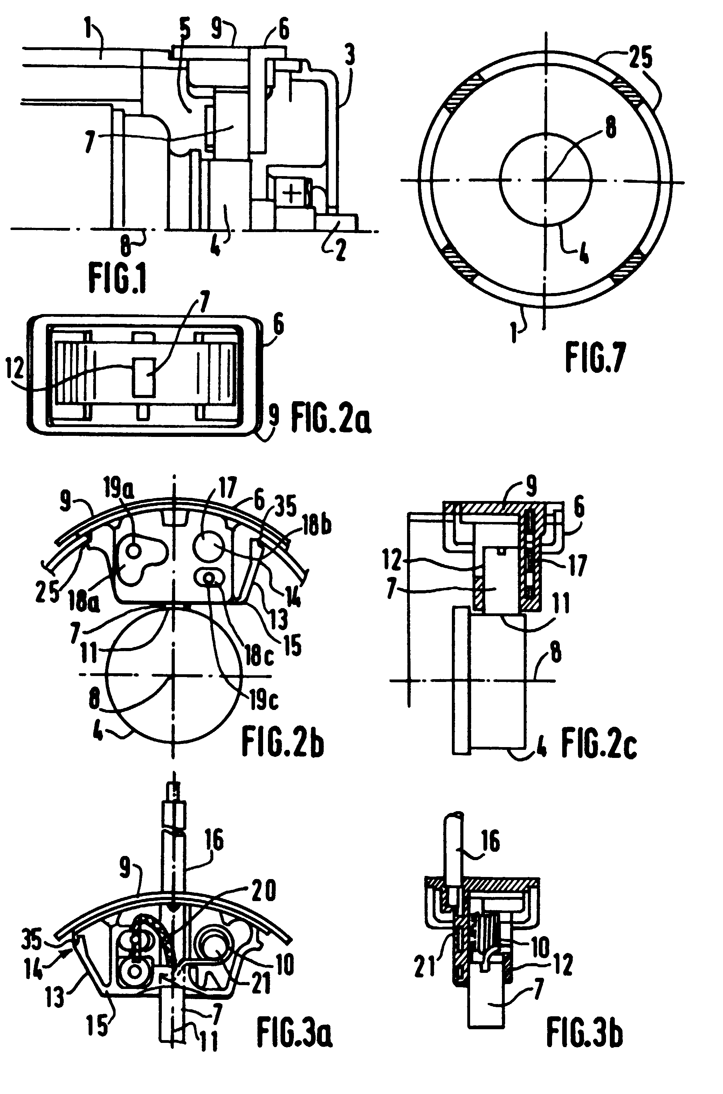

Sur la figure 1, ce moteur comprend un carter 1 qui protège de l'extérieur les autres parties du moteur. L'arbre 2 d'axe 8 traverse une extrémité 3 du carter. Le collecteur 4 et la chambre de commutation 5 se trouvent au voisinage de l'extrémité 3.

Le moteur comprend quatre balais et quatre supports de balai répartis symétriquement autour de l'axe 8 du moteur.

En référence aux figures 1 à 3b, chaque support 6 de balai comprend un balai 7 en forme générale de parallélépipède rectangle. Le balai 7 d'un type connu est disposé selon une orientation radiale à l'axe 8 du moteur avec l'une 11 de ses extrémités en contact avec le collecteur 4. Le frottement de cette extrémité 11 sur le collecteur 4 cylindrique a produit la forme légèrement courbe de cette extrémité.

Comme on le voit en coupe sur la figure 7 notamment, la région du carter 1 se trouvant au voisinage du collecteur 4 a une forme sensiblement cylindrique.

La portion 9 du support 6 située à l'opposé du balai 7 et visible à l'extérieur du carter 1 a une forme générale en secteur de quart de cylindre de sorte que le balai 7 est orienté sensiblement suivant une direction radiale à l'axe du cylindre. Le cylindre a son axe du côté du balai 7, cet axe étant confondu avec l'axe 8 du moteur lorsque le support 6 est installé sur le carter 1.

Le balai 7 est mobile radialement à l'intérieur du support 6 dans un conduit tubulaire 12 à section rectangulaire qui épouse les contours du balai 7. Le support 6 comprend des moyens de rappel du balai 7 pour le maintenir en contact avec le collecteur 4. Ces moyens comprennent un ressort de rappel 10 visible sur les figures 3a et 3b. Ce ressort hélicoïdal 10 est disposé avec son axe 21 parallèle à l'axe 8 du moteur. L'une des extrémités du ressort est fixée au corps du support alors que l'autre extrémité est appuyée à l'extrémité du balai 7 opposée au collecteur 4.

Le support 6 comprend des moyens d'encliquetage pour fixer le support au carter 1 du moteur par encliquetage sensiblement radial à l'axe 8 du carter 1, et le séparer de celui-ci par décliquetage sensiblement radial.

Dans le présent exemple, les moyens d'encliquetage comprennent une patte 13 ayant une extrémité mobile 14 suivant une direction sensiblement orthogonale à la direction de mobilité du balai. Sur la figure 2b, le balai étant mobile de bas en haut, l'extrémité 14 est mobile de gauche à droite. L'extrémité 14 présente un épaulement 35 orienté vers l'extérieur du support.

La patte 13 est fixée rigidement par une deuxième extrémité 15 au corps du support 6 et est réalisée en un matériau élastique par exemple en une matière plastique adaptée comme nous le verrons plus loin.

Le support 6 comprend en outre des moyens de connexion électrique du balai 7.

En référence aux figures 3a et 3b, les moyens de connexion comprennent un pôle de connexion, tel qu'un fil 16 qui s'étend depuis la face extérieure de la portion 9 en secteur de cylindre.

Les moyens de connexion comprennent aussi une plaque métallique 17, par exemple en laiton, connectée au balai 7 et reliée au fil 16. La plaque 17 a une forme générale rectangulaire et s'étend suivant un plan sensiblement parallèle à la direction de mobilité du balai. Dans le présent exemple, ce plan est orthogonal à l'axe 8 et est le plan des figures 2b et 3a.

La plaque 17 est au moins partiellement à nu par rapport au corps du support comme le montrent les figures 2b et 2c qui représentent le support 6 avec seulement le corps et la plaque 17. Sur la figure 2b, on distingue les parties à nu 18a, 18b et 18c de la plaque 17. La plaque 17 est noyée partiellement dans la masse du corps du support.

Les parties à nu 18a et 18c de la plaque 17 présentent chacune un orifice respectif 19a et 19c. L'orifice 19a est agencé pour permettre la fixation d'une vis ou analogue. Pour cela, la région du corps du support située derrière cet orifice sur la figure 2b est taraudée.

Le balai 7 est relié à la plaque 17 au moyen d'une tresse de cuivre 20 dont la souplesse ne nuit pas à la mobilité du balai.

L'ensemble du support 6, à l'exception du balai 7, des moyens de rappel 10 et des moyens de connexion, est constitué d'une matière plastique adaptée. Celle-ci doit résister à des écarts de température allant de -20°C à 200°C sans fluer et en se dilatant très peu. Elle doit également présenter la résilience nécessaire à l'élasticité de la patte 13.

Pour remplir ces critères, le corps du support peut avantageusement être réalisé en polyamide 46 chargé à 30% avec de la fibre de verre, distribué notamment par le groupe DSM sous l'appellation commerciale Stanyl TW 200 F6.

Pour recevoir les supports 6, le carter 1 du moteur présente des évidements 25 pour la fixation des supports comme on le voit sur les figures 2b et 7. Ces évidements ont été réalisés en ôtant quatres portions respectives de secteur de cylindre au cylindre constituant la paroi du carter 1.

Chaque évidement 25 représente une surface évidée plus petite que la surface de la portion 9 en secteur de cylindre du support 6, mais au moins trois fois plus grande que la section axiale du balai 7. Dans le présent mode de réalisation, la section de chaque évidement 25 est bien supérieure puisqu'elle dépasse 10 fois la section du balai 7.

Ainsi, dans le présent mode, la somme de la mesure des surfaces évidées sur le carter, correspondant aux évidements 25 visibles en coupe sur la figure 7, est supérieure ou égale à la demi-somme de la mesure des surfaces non-évidées se trouvant entre deux évidements 25 successifs (qui sont hachurées sur cette même figure).

Ces rapport dimensionnels traduisent le fait que lorsque les quatres supports 6 sont ôtés du carter, les quatres évidements 25 offrent un très large accès au collecteur 4.

Le support 6 de balai selon l'invention est fabriqué de la façon suivante:
- la plaque 17 est découpée, et au besoin le fil 16 est soudé à celle-ci à cette même étape;
- l'ensemble est mis en place dans un outil de surmoulage adapté;
- le corps du support en matière plastique est surmoulé par injection autour de la plaque 17 selon une technique de moulage par injection classique afin de noyer partiellement la plaque 17 dans le corps;
- le balai 7 est monté dans le conduit 12 du support 6;
- la tresse de cuivre 20 est soudée à la plaque 17 et au balai 7; et
- le ressort 10 est installé dans le support.

Le support 6 selon l'invention est utilisé comme suit.

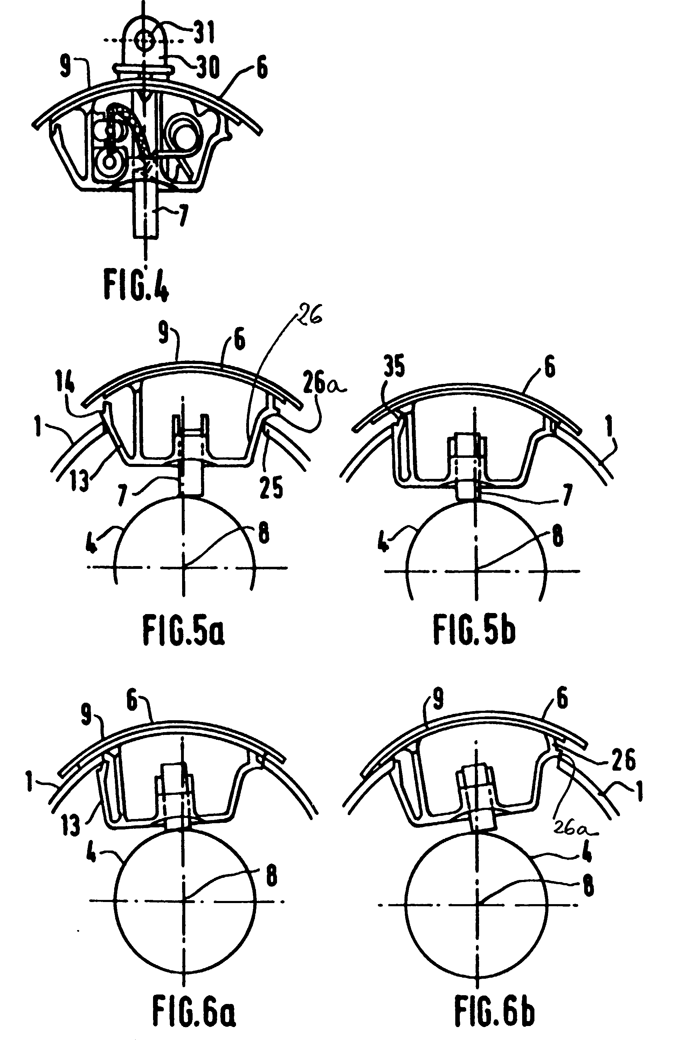

En référence aux figures 5a et 5b, pour fixer le support 6 au carter 1, on présente le support 6 en l'introduisant partiellement dans le carter 1. Lorsque le support 6 est en contact avec les bords de l'évidement 25 par la patte 13 et la face 26 du support opposée à la patte 13 comme sur la figure 5a, on presse radialement sur la portion 9 en secteur de cylindre. La patte 13 se replie partiellement vers le corps du support pour que le support pénètre davantage dans l'évidement 25 comme sur la figure 5b. Lorsque le support a atteint sa position dans le carter, l'encliquetage a lieu par le déploiement soudain de la patte 13 dont l'extrémité 14 vient se plaquer contre la paroi du carter, l'épaulement 35 empêchant la sortie du support comme sur la figure 2b.

Pour ôter le support 6 du carter 1, en référence aux figures 6a et 6b, on presse le support 6 tangentiellement à la paroi du carter (suivant la direction de mobilité de la patte 13, vers la gauche sur la figure 6a) pour presser la patte 13 contre le bord de l'évidement 25. Sous la pression, la patte 13 se déplace vers le corps du support tandis que l'extrémité 26a en saillie vers l'extérieur de la face 26 s'éloigne de l'autre bord de l'évidement 25 comme sur la figure 6a. Lorsque l'extrémité 26a est suffisamment éloignée en position de décliquetage, un léger basculement autour du bord de l'évidement en contact avec la patte 13 permet de dégager le support de l'évidement 25 par l'extrémité 26a comme sur la figure 6b.

L'installation et le démontage du support selon l'invention sont donc très rapides et peuvent être accomplis pour chaque opération de maintenance pour fournir un accès au collecteur 4, à la chambre de commutation 5 et au balai 7.

Les parties à nu de la plaque 17 permettent de réaliser divers types de connexion interne au moteur d'un côté ou de l'autre du support 7, le support ne comprenant pas le fil 16. Alternativement, la connexion externe du balai au moyen du fil 16 laisse libre l'intérieur du carter de part et d'autre du support 6, ce qui permet d'y disposer d'autres organes comme un disque de frein par exemple.

La figure 4 montre une variante de ce mode de réalisation. Dans cette variante, le fil 16 est remplacé par une borne 30 rigide pourvue d'un orifice 31. Comme le fil, la borne 30 est reliée à la plaque 17 pour être connectée au balai.

Le support de balai selon l'invention assure le guidage du balai, il maintient le balai en pression contre le collecteur et permet la connexion électrique du balai, indépendamment de l'enveloppe de la machine. Il obture extérieurement l'accès au balai et à la chambre de commutation et se fixe de façon autonome sans outil sur la machine.

Le support de balai est solidement fixé au carter mais peut être ôté tout aussi facilement qu'il est installé. Une fois ôté, il offre un large accès à la chambre de commutation et au balai.

Le support de balai est complètement indépendant des paliers de la machine. Il permet le remplacement du balai ou du support sans démontage de la machine.

## Revendications

1. Support de balai pour machine électrique tournante, ce support (6) comprenant un balai (7) mobile, des moyens de rappel (10) du balai pour le maintenir en contact avec le collecteur (4) de la machine, et des moyens d'encliquetage (13) pour fixer le support au carter (1) de la machine par encliquetage radial à l'axe (8) du carter, caractérisé en ce qu'il comporte deux moyens d'encliquetage (13, 26), opposés l'un à l'autre sur le support (6), l'un (13) étant élastique et permettant le déplacement tangentiel du support (6) par rapport au carter (1) d'une distance suffisamment éloignée pour décliqueter l'autre moyen (26).

2. Support selon la revendication 2 caractérisé en ce que les moyens d'encliquetage comprennent une patte (13) ayant une extrémité mobile (14) suivant une direction sensiblement orthogonale à la direction de mobilité du balai (7).

3. Support selon la revendication 3 caractérisé en ce que la patte (13) est fixée rigidement par une deuxième extrémité (15) au corps du support et est réalisée en un matériau élastique.

4. Support selon l'une des revendications 1 à 3, la région du carter (1) se trouvant au voisinage du collecteur (4) ayant une forme sensiblement cylindrique, caractérisé en ce que la portion (9) du support située à l'opposé du balai (7) a une forme générale en secteur de cylindre de sorte que le balai est orienté sensiblement suivant une direction radiale à l'axe du cylindre, le cylindre ayant son axe du côté du balai (7).

5. Support selon la revendication 4 caractérisé en ce qu'il comprend un pôle de connexion électrique du balai, tel qu'un fil (16) ou une borne (30), qui s'étend depuis la face extérieure de la portion (9) en secteur de cylindre.

6. Support selon l'une des revendications 1 à 5 caractérisé en ce qu'il comprend une plaque métallique (17) connectée au balai (7) et au moins partiellement à nu par rapport au corps du support, et autour de laquelle le corps du support (6) est surmoulé par injection

7. Machine électrique tournante caractérisée en ce qu'elle comporte au moins un support (6) de balai selon l'une des revendications précédentes.

8. Machine électrique tournante comprenant un carter (1) qui présente des évidements (25) pour la fixation de supports de balai, cette machine étant caractérisée en ce que le carter (1) comprend au voisinage des bords de chaque évidement (25) des moyens d'encliquetage (13, 26) pour fixer le support au carter par encliquetage radial à l'axe du carter, et le séparer de celui-ci par déplacement tangentiel.

9. Machine selon la revendication 8 caractérisé en ce que les moyens d'encliquetage comprennent une patte (13) fixée au carter et ayant une extrémité (14) mobile suivant une direction non-radiale à l'axe du carter.

10. Machine selon l'une des revendications 7 à 9 caractérisé en ce que chaque évidement (25) représente une surface évidée au moins trois fois plus grande que la section axiale du balai.

11. Procédé de fabrication d'un support (6) de balai selon l'une des revendications 1 à 6 caractérisé en ce qu'il comprend les étapes successives consistant à:
- découper une plaque de métal (17) ; et
- surmouler par injection le corps du support autour de cette plaque afin de la noyer partiellement dans le corps.

## Patentansprüche

1. Bürstenträger für drehende Elektromaschine, wobei dieser Träger (6) eine bewegliche Bürste (7), Rückstellmittel (10) der Bürste, um sie in Kontakt mit dem Kollektor (4) der Maschine zu halten, und Einrastmittel (13) zur Befestigung des Trägers am Gehäuse (1) der Maschine durch zur Gehäuseachse (8) radiales Einrasten umfasst, dadurch gekennzeichnet, dass er zwei auf dem Träger (6) einander gegenüberliegend angeordnete Einrastmittel (13, 26) aufweist, wovon eins (13) elastisch ist und die tangentielle Versetzung des Trägers (6) in Bezug auf das Gehäuse (1) um einen ausreichenden Abstand ermöglicht, um das andere Mittel (26) auszuhaken.

2. Träger nach Anspruch 2, dadurch gekennzeichnet, dass die Einrastmittel eine Lasche (13) umfassen, die ein nach einer etwa orthogonal in Bezug auf die Bewegungsachse der Bürste (7) verlaufenden Richtung bewegliches Ende (14) aufweist.

3. Träger nach Anspruch 3, dadurch gekennzeichnet, dass die Lasche (13) mit einem zweiten Ende (15) am Körper des Trägers starr befestigt ist und aus einem elastischen Werkstoff besteht.

4. Träger nach einem der Ansprüche 1 bis 3, wobei sich die zone des Gehäuses (1) in der Nähe des Kollektors (4) von im wesentlichen zylindrischer Form befindet, dadurch gekennzeichnet, dass der der Bürste (7) gegenüberliegende Abschnitt (9) des Trägers im allgemeinen eine Zylindersektorenform aufweist, so dass die Bürste etwa nach einer radial zur Zylinderachse verlaufenden Richtung orientiert ist, wobei sich die Zylinderachse auf der Seite der Bürste (7) befindet.

5. Träger nach Anspruch 4, dadurch gekennzeichnet, dass er einen Stromanschlusspol der Bürste umfasst, wie zum Beispiel einen Draht (16) oder eine Klemme (30), der sich ab der Aussenseite des Zylindersektorabschnitts (9) erstreckt.

6. Träger nach einem der Ansprüche 1 bis 5, dadurch gekennzeichnet, dass er eine an der Bürste (7) angeschlossene und in Bezug auf den Trägerkörper zumindest teilweise blanke Metallplatte (17) umfasst, um die herum der Trägerkörper (6) im Spritzgussverfahren abgeformt ist.

7. Drehende Elektromaschine, dadurch gekennzeichnet, dass sie mindestens einen Bürstenträger (6) nach einem der vorstehenden Ansprüche umfasst.

8. Drehende Elektromaschine mit einem Gehäuse (1), das Aussparungen (25) für die Befestigung von Bürstenträgern aufweist, wobei diese Maschine dadurch gekennzeichnet ist, dass das Gehäuse (1) in der Nähe der Ränder jeder Aussparung (25) Einrastmittel (13, 26) umfasst, um den Träger durch in Bezug auf die Gehäuseachse radiales Einrasten am Gehäuse zu befestigen, und ihn durch tangentielles Verschieben von ihm zu trennen.

9. Maschine nach Anspruch 8, dadurch gekennzeichnet, dass die Einrastmittel eine am Gehäuse befestigte Lasche (13) sowie ein nach einer in Bezug auf die Gehäuseachse nicht radialen Richtung bewegliches Ende (14) aufweist.

10. Maschine nach einem der Ansprüche 7 bis 9, dadurch gekennzeichnet, dass jede Aussparung (25) eine ausgesparte Oberfläche darstellt, die mindestens drei Mal grösser ist als der axiale Querschnitt der Bürste.

11. Herstellungsverfahren eines Bürstenträgers (6) nach einem der Ansprüche 1 bis 6, dadurch gekennzeichnet, dass es die aufeinanderfolgenden Etappen umfasst, die darin bestehen:
- eine Metallplatte (17) auszustanzen; und
- den Trägerkörper um diese Platte herum im Spritzgussverfahren abzuformen, um sie teilweise in den Körper einzubetten.

## Claims

1. A broom support for a rotating electric machine, such support (6) comprising a mobile broom (7), broom holding means (10) for maintaining it in contact with the machine collector (4), and locking means (13) for fixing the support to the casing (1) of the machine radially with respect to the casing axis (8), characterised in that it includes two locking means (13, 26) opposite one another on the support (6) the one (13) being resilient and allowing for the tangential displacement of the support (6) with respect to the casing (1) by a sufficient distance for unlocking the other means (26).

2. A support according to Claim 1, characterised in that the locking means comprise a lug (13) having a mobile end (14) which can move along a direction substantially perpendicular to the broom (7) displacement direction.

3. A support according to Claim 2, characterised in that the lug (13) is rigidly fixed by a second end (15) to the support body and is made of a resilient material.

4. A support according to any one of Claims 1 to 3, the casing (1) region being near the collector (4) and having a substantially cylindrical shape, characterised in that the portion (9) of the support located opposite the broom (7) is typically shaped as a cylinder portion such that the broom is substantially oriented radially with respect to the cylinder axis, the axis of the cylinder being on the broom side (7).

5. A support according to Claim 4, characterised in that it comprises a broom electric connection pole, such a a wire (16) or a terminal (30) extending from the external face of the cylinder portion (9).

6. A support according to any one of Claims 1 to 5, characterised in that it comprises a metal plate (17) connected to the broom (7) and at least partially bare with respect to the support body, and around which the support (6) body is injection-moulded

7. A rotating electric machine, characterised in that it includes at least a broom (6) support according to any one of the preceding claims.

8. A rotating electric machine comprising a casing (1) having recesses (25) for fixing the broom supports, such machine being characterised in that the casing (1) comprises, near the edges of each recess (25), locking means (13, 26) for fixing the support to the casing radially with respect to the casing axis, and for disconnecting it therefrom by a tangential displacement.

9. A machine according to Claim 8, characterised in that the locking means comprise a lug (13) fixed to the casing and having a mobile end (14) which can move along a non-radial direction with respect to the casing axis.

10. A machine according to any one of Claims 7 to 9, characterised in that each recess (25) represents a recessed surface at least three times as big as the axial section of the broom.

11. A manufacturing process for a broom support (6) according to any one of Claims 1 to 6, characterised in that it comprises the steps of :
- cutting a metal plate (17) ; and
- injection-moulding the support body around such plate so that it is partially embedded in the body.
